# EUROPÄISCHE PATENTSCHRIFT

(11) **EP 0 656 284 B1**
(45) Veröffentlichungstag und Bekanntmachung des Hinweises auf die Patenterteilung: **12.03.1997**
(21) Anmeldenummer: 94118457.4
(22) Anmeldetag: 24.11.1994
(51) Int. Cl.: B60R 21/20

(54) **Befestigung eines Luftsackes im Gehäuse eines Airbagmoduls**
Device for fastening an air bag inside an air bag housing
Fixation d'un sac gonflable dans le boîtier d'un module de sac gonflable

(30) Priorität: 01.12.1993 DE 4340855
(43) Veröffentlichungstag der Anmeldung: 07.06.1995
(73) Patentinhaber: ADAM OPEL AG, 65423 Rüsselsheim (DE)
(72) Erfinder: Rick, Ulrich, Dipl.-Ing., D-55595 Roxheim (DE); Klenk, Jürgen, Dipl.-Ing., D-65468 Geinsheim (DE)
(74) Vertreter: Kümpfel, Heinz, Dipl.-Ing.

(56) Entgegenhaltungen:
- EP-A- 0 558 240
- EP-A- 0 602 785
- EP-A- 0 602 796
- EP-A- 0 620 140
- FR-A- 2 335 373
- US-A- 5 263 739

## Beschreibung

Die Erfindung betrifft eine Befestigung eines Luftsackes im Gehäuse eines Airbagmoduls, wobei dieses Gehäuses den gefalteten Luftsack in einem Raum sowie einen Gasgenerator zum Aufblasen des Luftsackes in einem anderen Raum umschließt und der Luftsack mit seinem Rand am Gehäuse zwischen den beiden Räumen befestigt ist.

Mit EP-A-0 558 240 ist ein Airbagmodul beschrieben, dessen Gehäuse aus einem Abschnitt eines Strangpreßprofils sowie aus zwei die beiden Enden des Strangpreßprofilabschnittes verschließenden Deckelteilen besteht. Das Gehäuse bildet einen rohrförmigen Raum für die Aufnahme eines Gasgenerators sowie einen Raum für die Aufnahme des gefalteten Luftsackes. Letzterer Raum ist begrenzt von zwei durch das Strangpreßprofil gebildete Seitenwände, die beiden Deckelteile sowie am Grund des Raumes durch die durchbrochene Wand des rohrförmigen Raumes für die Gasgeneratoraufnahme. In den Ecken zwischen den Seitenwänden der durchbrochenen Wand des rohrförmigen Teils sind längs des Strangpreßprofils sich nach innen erweiternde Rinnen für die Befestigung des Luftsackes vorgesehen. In diese Rinnen sind die zwei Längsseiten der Luftsacköffnung, die zu einem Hohlsaum vernäht sind, zusammen mit je einem im Hohlsaum befindlichen Stab in Längsrichtung des Gehäuses eingesetzt.

Damit ist der Luftsack im Gehäuse zwar formschlüssig und funktionsgerecht angebracht. Die Anbringung selbst ist jedoch relativ zeitaufwendig, da lange Montagewege und damit lange Montagezeiten unausweichlich sind. Ein Hinweis über eine Befestigungsmöglichkeit der kurzen Seiten der Luftsacköffnung ist dabei nicht gegeben.

Aufgabe der Erfindung ist es daher, eine Befestigung des Luftsackes im Gehäuse eines Airbagmoduls der eingangs genannten Art zu schaffen, bei welcher der Luftsack durch Formschluß funktionsgerecht im Gehäuse gehalten ist, wobei neben den langen Seiten an einem Beifahrer-Airbagmodul auch der gesamte Rand einer Luftsacköffnung unabhängig von seiner Form gehalten werden kann und bei welcher die Befestigung selbst auf technologisch einfache Weise möglich ist.

Erfindungsgemäß wird diese Aufgabe dadurch gelöst, daß der Rand der Luftsacköffnung in an sich bekannter Weise als Hohlsaum gestaltet und in dem Kohlsaum ein Stab enthalten ist, der Hohlsaum mit dem darin befindlichen Stab in einer von federnden Schenkeln schließbaren Rinne eines den Luftsack in Einbaulage haltenden Rahmens liegt, die federnden Schenkel vom Gehäuse des Airbagmoduls in Einbaulage durch Formschluß in eine Hohlsaum und Stab umfassende Schließstellung gebracht sind und dabei die Rinne des Rahmens im Gehäuse formschlüssig gehalten ist.

Eine besonders vorteilhafte Art, längs verlaufende Rinnen des Rahmens mit dem Gehäuse in Formschluß zu bringen, besteht darin, im Gehäuse zwischen dem Raum für den Luftsack und dem Raum für den Gasgenerator beidseitig je eine Nut vorzusehen, die am Grund breiter als an der Oberseite ist und die Rinnen des Rahmens mit den Stäben und dem sie umfangenden Hohlsaum des Luftsackes sowie mit den federnden Schenkel längs in diese Nuten einzuschieben, so daß die federnden Schenkel von den Rändern der Nuten in eine Lage gebracht sind, die ein Lösen der Stäbe mit dem Luftsack aus den Rinnen unmöglich macht.

Der Luftsack kann somit bereits beim Nähen mit den Stäben innerhalb der Hohlsäume versehen werden. Die Hohlsäume können danach zusammen mit den darin enthaltenen Stäben in die federnden Schenkel des Rahmens eingeklipst werden. Damit hat die Öffnung des zusammengefalteten Luftsacks bereits die Form und Abmessungen, wie sie diese später auch im Gehäuse des Airbagmoduls einnimmt. Eventuelle schädliche Falten oder Unkorrektheiten am Luftsack können außerhalb des Gehäuses leicht erkannt und beseitigt werden. Der Rahmen mit dem aufgeklipsten Luftsack kann dann einfach so in Formschluß mit dem Gehäuse gebracht werden, das Teile des Gehäuses ein Auffedern der Schenkel des Rahmens verhindern. Damit ist der Luftsack mit seiner Öffnung funktionsgerecht und sicher im Gehäuse gehalten. Verschiedentlich ist es ausreichend, wenn allein die Längsseiten des Luftsackes so durch den Rahmen gehalten werden. Dabei kann der Rahmen so ausgebildet sein, daß er lediglich die beiden Längsseiten der Luftsacköffnung aufnimmt; er kann aber auch die verbleibenden beiden Kurzseiten haltend aufnehmen. Dadurch ist die komplette zum Gasgenerator gerichtete Öffnung des Luftsackes definiert festgehalten. Die Entfaltung des Luftsackes beim Aktivieren des Airbags kann durch eine solche Ausführung optimiert werden.

Die beiden Kurzseiten der Luftsacköffnung können dazu gleichfalls als Hohlsaum genäht sein, in welchem sich jeweils ein Stab befindet, wobei die Hohlsäume von federnden Schenkeln an den kurzen Seiten des Rahmens umspannt und diese federnden Schenkel von den am Gehäuse montierten Deckelteilen gegen Auffedern gesichert sind. Der an den Längsseiten fixierte Rahmen hält dann auch die Kurzseiten an ihrer optimalen Position.

Die Erfindung ist aber ebenso für die Halterung eines Luftsackes mit einer runden Öffnung, wie er z. B. für einen Fahrerairbag üblich ist, geeignet. Der dann umlaufende Hohlsaum am Öffnungsrand des Luftsackes umschließt in diesem Falle einen Stab, welcher als Ring od. dgl. ebenfalls um den Luftsackrand herum verläuft. Zusammen mit diesem Ring wird der Luftsack in die federnden Schenkel eines Rahmens eingeklipst. Der Rahmen selbst wird danach vom Raum für den Luftsack her in eine umlaufende sich innen erweiternde Rahmenführung des Gehäuses eingedrückt, so daß die starren Wände des Gehäuses die federnden Schenkel des Rahmens spannen und damit auch die den Stab mit den ihn umfangenden Hohlsaum umschließende Rinne verschließen. Die obere Kante der federnden Schenkel verrastet in Einbaulage hinter einer Kante an der starren Wand der Rahmenführung des Gehäuses.

Der die Öffnung des Luftsackes haltende Rahmen ist im Gehäuse des Airbagmoduls zwischen dem Raum für die Aufnahme des gefalteten Luftsackes und dem rohrförmigen Teil zur Aufnahme des Gasgenerators angeordnet und mit Durchbrüchen versehen.

Die Durchbrüche erlauben ein gezieltes Befüllen des Luftsackes mit dem vom Gasgenerator generierten Gas.

Die Durchbrüche können vorteilhafterweise mit einem Filter überdeckt sein, so daß bei Gasgenerierung entstehende Partikel zurückgehalten werden.

Ausführungsbeispiele der Erfindung sind nachstehend anhand von Zeichnungen näher beschrieben. Es zeigen
- Fig. 1:: ein Airbagmodul für einen Beifahrerairbag in perspektivischer Darstellung;
- Fig. 2:: einen Schnitt entlang der Linie A - A in Fig. 1;
- Fig. 3:: einen Schnitt entlang der Linie B - B in Fig. 2;
- Fig. 4:: einen für das Airbagmodul nach Fig. 1 bis 3 bestimmten Rahmen in perspektivischer Darstellung;
- Fig. 5:: ein Airbagmodul für einen Fahrersitz im Schnitt;
- Fig. 6:: einen Rahmen für das Airbagmodul nach Fig. 5 im Schnitt.

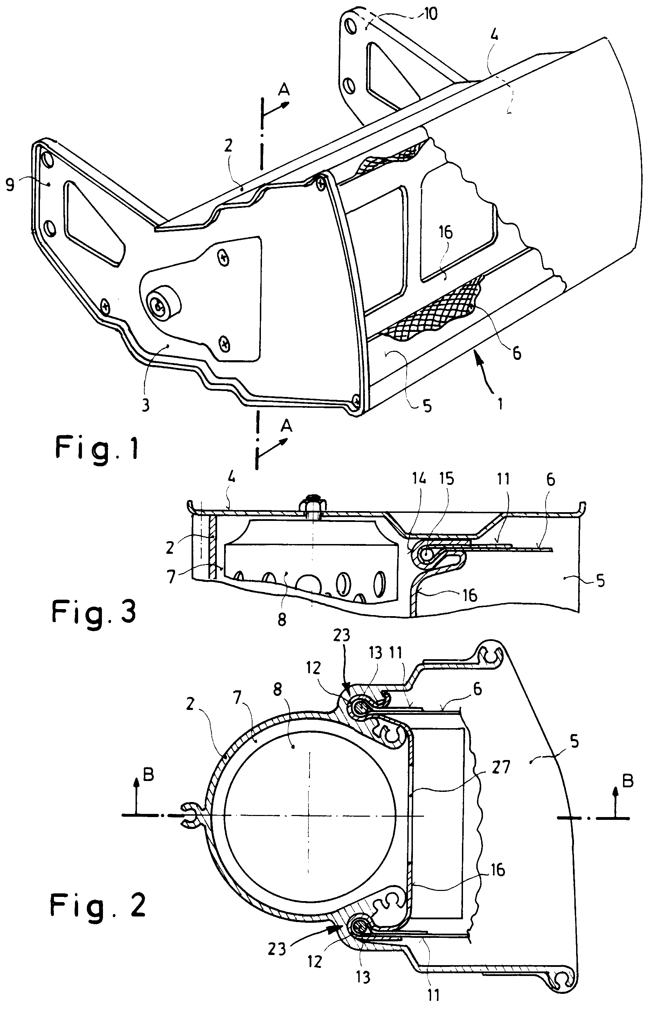

Das in Fig. 1 bis 4 dargestellte Beifahrer-Airbagmodul besteht aus einem Gehäuse 1, welches in an sich bekannter Weise von einem Abschnitt 2 eines Strangpreßprofils sowie von zwei die beiden Enden des Strangpreßprofilabschnittes 2 verschließenden Deckelteilen 3 und 4 gebildet wird. In Fig. 2 ist der Querschnitt dieses Strangpreßprofils ersichtlich. Das Gehäuse 1 umschließt einen Raum 5 für die Aufnahme eines gefalteten Luftsackes 6, von dem hier nur die Befestigungsränder dargestellt sind, sowie einen im wesentlichen rohrförmigen Raum 7 für die Aufnahme eines Gasgenerators 8. Die Deckelteile 2 und 3 bilden Konsolen 9 und 10 zum Befestigen des Gehäuses 1 an der Fahrzeugstruktur.

Die dem Gasgenerator 8 zugewandte Öffnung des Luftsackes 6 ist an ihrem Rand mit einem Hohlsaum 11 versehen. In diesem Hohlsaum 11 ist an den beiden Längsseiten 12 der Luftsacköffnung jeweils ein Stab 13 und in den beiden Kurzseiten 14 der Luftsacköffnung ebenfalls jeweils ein Stab 15 enthalten. Die Stäbe 13 und 15 haben einen runden Querschnitt, wobei natürlich auch andere Querschnittsformen denkbar sind.

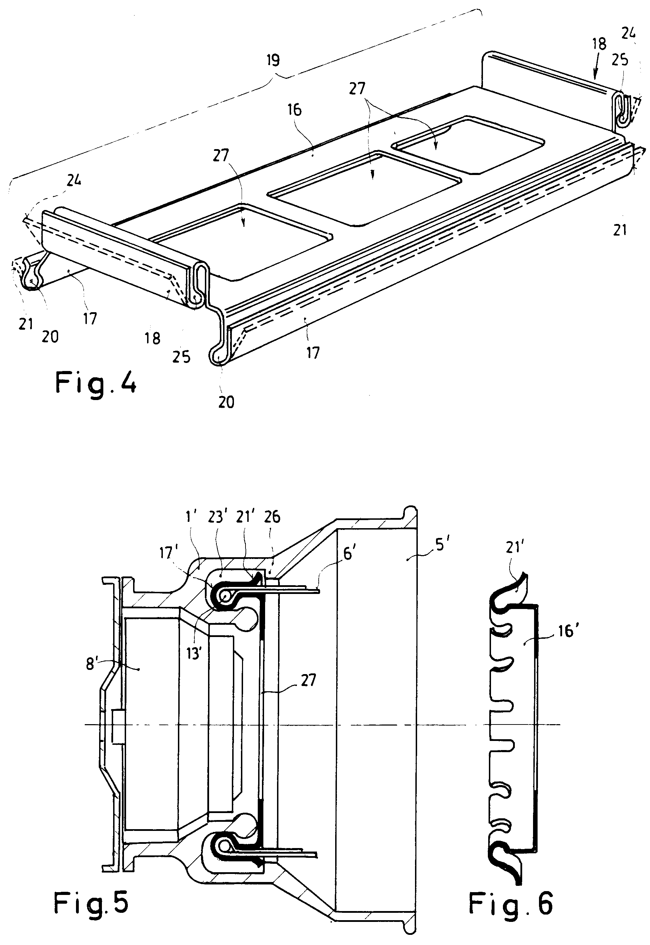

Die Hohlsäume 11 mit den darin enthaltenen Stäben 13, 15 befinden sich in am Rande eines Rahmens 16 (Fig. 4) befindlichen Rinnen 17 und 18. Der Rahmen 16 besteht aus verformten Stahlblech und erstreckt sich zwischen dem Raum 5 für den Luftsack 6 und dem Raum 7 für den Gasgenerator 8. Die beiden Rinnen 17 werden gebildet durch Umformen der beiden Längsseiten 19 des Rahmens 16, so daß eine dem Querschnitt des Stabes 13 angepaßte Hohlkontur 20 entsteht, die nach oben hin als Spalt geöffnet ist, in dem der äußere Schenkel 21 der Hohlkontur 20 leicht abspreizt (in Fig. 4 gestrichelt dargestellt).

Ähnlich sind die beiden kurzen Rinnen 18 gebildet, bei denen jedoch zuerst ein nach oben ragender Steg 22 geformt ist. Dies ist erforderlich, um den Rahmen 16 in das für dieses Ausführungsbeispiel spezifische Gehäuse 1 einsetzen zu können.

Im Gehäuse 1 sind entlang des Strangprofilabschnittes 2 zwischen dem Raum 5 für den Luftsack 6 und dem Raum 7 für den Gasgenerator 8 Nuten 23 eingeformt. In die Nuten 23 lassen sich die beiden an den Längsseiten 19 des Rahmens 16 befindlichen Hohlkonturen 20 einschieben, wobei der abgespreizte Schenkel 21 durch die Form der Nuten 23 an den Rahmen 16 angedrückt wird. Die zum Luftsack 6 hin geöffnete Spalte an den Hohlkonturen 20 wird damit geschlossen und die Stäbe 13 mit dem sie umhüllenden Hohlsaum 11 des Luftsackes 6 sind formschlüssig im Rahmen 16 und dieser ist formschlüssig in dem Strangpreßprofilabschnitt 2 des Gehäuses 1 gehalten.

Beim Verschließen des Gehäuses 1 mit den Deckelteilen 3 und 4 werden auch die abgespreizten Schenkel 24 der Hohlkontur 25 um die Rinne 18 an den kurzen Seiten des Rahmens 16 angedrückt, in dem dort die Deckelteile 3 und 4 formschlüssig anliegen (Fig. 3).

Ein weiteres Ausführungsbeispiel der Erfindung ist mit Fig. 5 und 6 dargestellt. Bei diesem wird der Rahmen 16' nicht längs eines Gehäuses 1' eingeschoben, sondern von dem Raum 5' für den Luftsack 6' her in einen Rahmenführung 23' eingedrückt. Die Rahmenführung 23' hat einen zum Rahmen 16' hin weisenden Vorsprung 26, hinter dem sich die äußere Kante des abgespreizten Schenkels 21' der Rinne 17' nach Anfedern an den Rahmen 16' abstützen kann.

Ein im Hohlsaum 11 des Luftsackes 6 befindlicher Stab 13' hat dann vor dem Einnähen eine dem Rahmen 16' entsprechende Form.

Eine derartige Ausführungsform eignet sich für beliebige Rahmenformen, z. B. auch für einen runden Rahmen 16', wie er in Fig. 6 dargestellt ist. Damit ist die Erfindung auch für Airbagmodule z. B. im Lenkrad von Kraftfahrzeugen geeignet.

Der Rahmen 16, 16' hat Durchbrüche 27, die ein gezieltes Befüllen des Luftsackes mit Gas ermöglichen. Diese Durchbrüche können mit einem Filtergewebe abgedeckt sein, welches die bei der Gasgenerierung entstehenden Partikel zurückhält. Dieses Filtergewebe ist dann gleichfalls außerhalb des Gehäuses 1, 1' mit dem Rahmen 16, 16' vormontierbar.

Der Vorteil der Erfindung besteht insbesondere darin, daß der Luftsack eines Airbags mit einfachen Mitteln außerhalb des Gehäuses mit einem Befestigungsrahmen vormontiert werden kann und zusammen mit dem Rahmen als vormontiertes Teil, bei dem der Luftsack in der konstruktiv vorgesehenen Faltung vorliegt, auf einfache Weise im Gehäuse des Airbagmoduls sicher befestigbar ist.

## Patentansprüche

1. Befestigung eines Luftsackes im Gehäuse eines Airbagmoduls, wobei dieses Gehäuse (1) den gefalteten Luftsack (6) in einem Raum (5) sowie einen Gasgenerator (8) zum Aufblasen des Luftsackes in einem anderen Raum (7) umschließt und der Luftsack mit seinem Rand (11) am Gehäuse (1) zwischen den beiden Räumen befestigbar ist, **dadurch gekennzeichnet,** daß der Rand der Luftsacköffnung in an sich bekannter Weise als Hohlsaum (11) ausgeführt ist und in dem Hohlsaum (11) ein Stab (13, 15, 13') enthalten ist, der Hohlsaum (11) mit dem darin befindlichen Stab (13, 15, 13') in einer von federnden Schenkeln (21, 24, 21') schließbaren Rinne (17, 18, 17') einem den Luftsack in Einbaulage haltenden Rahmens (16, 16') liegt, die federnden Schenkel (21, 24, 21') vom Gehäuse (1, 1') des Airbagmoduls in Einbaulage durch Formschluß in eine Hohlsaum (11) und Stab (13, 15, 13') umfangende Schließstellung gebracht sind und dabei die Rinne (17, 18, 17') des Rahmens (16, 16') im Gehäuse (1, 1') formschlüssig gehalten ist.

2. Befestigung nach Anspruch 1, **dadurch gekennzeichnet,** daß im Gehäuse (1) zwischen dem Raum (5) für den Luftsack (6) und dem Raum (7) für den Gasgenerator (8) beidseitig je eine Nut (23) vorgesehen ist, die am Grund breiter als an der offenen Oberseite ist und die Rinnen (17) des Rahmens (16) mit den Stäben (13) und dem sie umfangenden Hohlsaum (11) der Öffnung des Luftsackes (6) sowie mit den federnden Schenkeln (21) längs in die Nuten (23) eingeschoben sind, wobei die Ränder der Nuten (23) die federnden Schenkel (21) in Schließlage halten.

3. Befestigung nach Anspruch 1, **dadurch gekennzeichnet,** daß im Gehäuse (1') zwischen dem Raum (5') für den Luftsack (6') und dem Raum (7') für den Gasgenerator (8') allseitig eine Rahmenführung (23') vorgesehen ist und eine Rinne (17') des Rahmens (16') mit einem im Hohlsaum (11) der Öffnung des Luftsackes (6') sowie mit den federnden Schenkeln (21') von Raum (5') für den Luftsack (6') her in die Rahmenführung (23') eingedrückt ist, wobei die federnden Schenkel (21') in eine Schließlage gelangen und deren obere freie Kante hinter einen Vorsprung (26) der Rahmenführung (23') greift.

4. Befestigung nach Anspruch 1 und 2, **dadurch gekennzeichnet,** daß allein die Längsseiten (12) der Luftsacköffnung am Rahmen (16) befestigt sind.

5. Befestigung nach Anspruch 1, **dadurch gekennzeichnet,** daß sowohl die Längsseiten (12) als auch die Kurzseiten (14) der Luftsacköffnung am Rahmen (16) befestigt sind.

6. Befestigung nach Anspruch 1 und 5, **dadurch gekennzeichnet,** daß die federnden Schenkel (24) der die Kurzseiten (14) der Luftsacköffnung haltenden Rinnen (18) des Rahmens (16) in Einbaulage von den Deckelteilen (3, 4) in Schließstellung gehalten sind.

7. Befestigung nach Anspruch 1 bis 6, **dadurch gekennzeichnet,** daß der Rahmen (16, 16') mit Durchbrüchen (27) zum Durchtritt des Aufblasgases versehen ist.

8. Befestigung nach Anspruch 7, **dadurch gekennzeichnet,** daß die Durchbrüche (27) mit einem Filter überdeckt sind.

## Claims

1. Fixing of an airbag in the housing of an airbag module, wherein this housing (1) surrounds the folded airbag (6) in one chamber (5) as well as a gas generator (8) for inflating the airbag in another chamber (7) and the airbag can be fixed by its edge (11) to the housing (1) between the two chambers, characterised in that the edge of the airbag opening in a manner known in the art is constructed as a hollow seam (11) and in the hollow seam (11) is contained a rod (13, 15, 13'), the hollow seam (11) with the rod (13, 15, 13') located therein lies in a channel (17, 18, 17') of a frame (16, 16') which keeps the airbag in the fitted position, which channel (17, 18, 17') is closable by spring arms (21, 24, 21') the spring arms (21, 24, 21') are brought by the housing (1, 1') of the airbag module in the fitted position by form locking into a closed position encompassing hollow seam (11) and rod (13, 15, 13') and in the process the channel (17, 18, 17') of the frame (16, 16') is held in form-locking relationship in the housing (1, 1').

2. Fixing according to claim 1, characterised in that in the housing (1) between the chamber (5) for the airbag (6) and the chamber (7) for the gas generator (8) on either side is provided a groove (23) which is wider at the bottom than at the open upper side, and the channels (17) of the frame (16) with the rods (13) and the hollow seam (11) of the opening of the airbag (6) encompassing them as well as with the spring arms (21) are inserted longitudinally in the grooves (23), wherein the edges of the grooves (23) keep the spring arms (21) in the closed position.

3. Fixing according to claim 1, characterised in that a frame guide (23') is provided in the housing (1') between chamber (5') for the airbag (6') and chamber (7') for the gas generator (8') and a channel (17') of the frame (16') is pressed into the frame guide (23') with a hollow seam (11) of the opening of the airbag (6') , as well as with the spring arms (21') from the frame guide (23') whereby the spring arms (21') reach a closed position, and their upper free edge engages behind a projection (26) of the frame guide (23').

4. Fixing according to claims 1 and 2, characterised in that only the longitudinal sides (12) of the airbag opening are fixed to the frame (16).

5. Fixing according to claim 1, characterised in that both the longitudinal sides (12) and the short sides (14) of the airbag opening are fixed to the frame (16).

6. Fixing according to claims 1 and 5, characterised in that the spring arms (24) of the channels (18) of the frame (16) which hold the short sides (14) of the airbag opening are in the fitted position held in the closed position by the cover portions (3, 4).

7. Fixing according to claims 1 to 6, characterised in that the frame (16, 16') is provided with apertures (27) for passage of the inflating gas.

8. Fixing according to claim 7, characterised in that the apertures (27) are covered with a filter.

## Revendications

1. Fixation d'un coussin gonflable dans un boîtier d'un module de coussin gonflable, le boîtier (1) renfermant, dans une chambre (5), le coussin gonflable (6) plié et, dans une autre chambre (7), un générateur de gaz (8), pour le gonflage dudit coussin gonflable, et le coussin gonflable étant fixé par son bord (11) au boîtier (1), entre les deux chambres, caractérisé par le fait que le bord de l'ouverture du coussin gonflable est conformé, de manière connue, en ourlet (11) creux et qu'un jonc (13, 15, 13') est placé dans l'ourlet (11) creux, que l'ourlet (11) avec le jonc (13, 15, 13') est inséré dans une gouttière (17, 18, 17') fermée par des ailes (21, 24, 21') élastiques d'un cadre (16, 16') qui maintient le coussin gonflable dans sa position de montage, que les ailes (21, 24, 21') du boîtier (1, 1') du module de coussin gonflable, en position de montage, sont amenées par complémentarité de forme dans une position de fermeture dans laquelle l'ourlet (11) et le jonc (13, 15, 13') sont prisonniers et la gouttière (17, 18, 17') du cadre (16, 16') est tenue par complémentarité de formes dans le boîtier (1, 1').

2. Fixation selon la revendication 1, caractérisé par le fait qu'une rainure (23) est prévue sur deux côtés dans le boîtier (1), entre la chambre (5) pour le coussin gonflable (6) et la chambre (7) pour le générateur de gaz (8), laquelle rainure est plus large au niveau de son fond qu'au niveau de son côté supérieur ouvert et que les gouttières (17) du cadre (16) avec les joncs (13) et l'ourlet (11) de l'ouverture du coussin gonflable (6) entourant ceux-ci ainsi que les ailes élastiques (21) sont insérées dans la direction longitudinale dans les rainures (23), les côtés des rainures (23) maintenant les ailes élastiques (21) en position fermée.

3. Fixation selon la revendication 1, caractérisé par le fait qu'une glissière (23') est prévue sur tous les côtés du boîtier (1'), entre la chambre (5') pour le coussin gonflable (6') et la chambre (7') pour le générateur de gaz (8'), et qu'une gouttière (17') du cadre (16') avec l'ourlet (11) de l'ouverture du coussin gonflable (6') et les ailes élastiques (21') est pressée, depuis la chambre (5') pour le coussin gonflable (6'), dans la glissière (23'), les ailes (21') élastiques étant amenées dans une position de fermeture et le bord libre supérieur de celles-ci s'engageant derrière un surplomb (26) de la glissière (23') de cadre.

4. Fixation selon les revendications 1 et 2, caractérisée par le fait que seuls les grands côtés (12) de l'ouverture du coussin sont fixées au cadre (16).

5. Fixation selon la revendication 1, caractérisée par le fait que les grands côtés (12) et les petits côtés (14) de l'ouverture du coussin sont fixées au cadre (16).

6. Fixation selon les revendications 1 et 5, caractérisée par le fait que seules les ailes (24) élastiques des gouttières (18) du cadre (16) qui maintiennent les petits côtés (14) de l'ouverture du coussin dans la position de montage, sont tenues dans la position fermée par les éléments de couvercle (3, 4).

7. Fixation selon les revendications 1 à 6, caractérisée par le fait que seul le cadre (16, 16') est pourvu de passages (27) pour l'écoulement du gaz de gonflage.

8. Fixation selon la revendication 7, caractérisée par le fait que seuls les passages (27) sont recouverts d'un filtre.
